# EUROPEAN PATENT APPLICATION

(11) **EP 2 590 283 A1**
(43) Date of publication of application: **08.05.2013**
(21) Application number: 11187762.7
(22) Date of filing: 03.11.2011
(51) Int. Cl.: H02G 3/30, F16L 3/233

(54) **A Tie for Fixing an Article to a Surface**

(71) Applicant: CMP Products Limited, Northumberland NE23 1WH (GB)
(72) Inventor: Dodd, Ron, Cramlington, Northumberland NE23 1WH (GB)
(74) Representative: Archer, Graham John

(57) **Abstract**

A tie (10) for fixing an article to a surface, in particular a cable tie (10), is disclosed. The cable tie (10) has a strap (18) having flexible portion (22) for wrapping around the cable and the flexible portion (22) has ridges (24) formed thereon. The cable tie (10) also includes a retaining member (26) for retaining the strap in engagement around the cable. The retaining member (26) has an aperture (28) extending therethrough for receiving the strap member (18). The cable tie (10) receives a fixing screw (44) extending through the retaining member (26), the strap member (18) and the flexible portion (22) and the screw forces an edge of the aperture (28) into engagement with one of the ridges (24).

## Description

The present invention relates to a tie for attaching an article to a surface and relates particularly, but not exclusively, to a tie for attaching a cable to a wall.

The use of cable ties is well known for tying cables together and they are also known for attaching cables to surfaces. Such ties typically have a flexible ridged strap portion that extends through a body that includes a ratchet mechanism that engages the ridges and allows the strap to pass through the body in one direction only. As a result, once the strap has extended around the article it is to support and through the body it is prevented by the ratchet mechanism from becoming disengaged from the article. Some cables ties are adapted to be fixed, by a screw or the like, to a surface. Typically this fixing will be by screwing the tie to a wall through a hole in the body.

Cable ties of this type have the disadvantage that the racket mechanism can be overcome thereby allowing release of the cable. However, overcoming the ratchet mechanism, whether accidental or deliberate, often results in damage to the mechanism thereby making the cable tie unfit for reuse. Furthermore, many such cable ties must be fixed into position before the cable is attached and where thick and heavy cables are used it can be the case that the tie is not located in a position most suited to the path of least resistance the cable wishes to take. This in turn puts additional strain onto the cable tie and its fixing. A further disadvantage of the prior art is that the gripping force, that is applied to the cable in a radially inward direction, is dependent upon the pulling force applied to the end of the strap. The strap is generally difficult to grasp significantly limiting the force that can be applied.

Preferred embodiments of the present invention seek to overcome the above described disadvantages of the prior art.

According to the present invention there is provided a tie for fixing an article to a surface, the tie comprising:-
a strap member having at least one at least partially flexible elongate portion for wrapping around an article that is to be fixed, the flexible portion having at a plurality of fixing ridges thereon; and
a retaining member for retaining the strap member in engagement around the article, the retaining member having at least one first aperture extending therethrough for receiving the strap member, said first aperture having an edge portion adapted to engage at least one of said fixing ridges, wherein said tie is adapted to receive a fixing member extending through said retaining member, said strap member and said flexible portion and thereby forcing said edge into engagement with at least one of said ridges thereby preventing removal of said strap member from said first aperture.

By providing a tie that includes a strap member and a retaining member which are fixed together using a screw to fix them to the surface the advantage is that the article is held very securely. In particular, the screw fixing presses the edge portion of the retaining member into engagement with the strap member adjacent a ridge thereby ensuring that the ridge extends beyond the edge of the aperture. This ensures that the strap member cannot pass through the aperture by using the fixing member to close aperture to a thickness of the strap, this being less than the thickness of the ridges the strap is fixed into position. This also increases the gripping force applied by the tie around the cable. The grip provided by the ratchet mechanism is equivalent to that provided by the devices of the prior art but the addition of the screw fixing increases the clamping force applied by the retaining member to the strap.

Furthermore, the ridges can be large, compared to those seen in the ratchet mechanism of the prior art, without affecting the grip provided by the retaining member. It is therefore simple to ensure that the point of weakness of the tie is not in either the ridges or the retaining member making the device of the present invention significantly stronger than those of the prior art.

It is also the case that the device for the present invention is reusable since the cable tie is easily released without damage to the tie or the article it is attached to. In the devices of the prior art the ratchet mechanism can be designed to be easily overcome, making the device reusable. However, this also increases the chances of accidental release of the cable which is a problem that does not arise in the device of the present invention. Alternatively, in the prior art, if the tie is very securely engaged with the article it is attached to and cannot be easily released, it makes deliberate release of the tie very difficult generally resulting in damage to the tie making re-use almost impossible.

In a preferred embodiment the strap further comprises a base portion that is connected to said strap member, said base portion being adapted to engage with said retaining member and have said fixing member extending therethough.

In another preferred embodiment the base member comprises a curved portion adapted to engage said article.

By providing a base portion, and in particular a partially curved base portion, that is not flexible like the strap portion, the advantage is provided that a rigid base is provided for engagement of the retaining member which aides the secure fixing the tie to the cable and to the surface to which it is to be engaged.

In a preferred embodiment the base member further comprises a second aperture extending therethrough.

In another preferred embodiment the strap member further comprises a plurality of third apertures aligned axially along said strap and adapted to receive said fixing means therethrough.

By providing apertures through the base member, the retaining member and the flexible portion of the strap member the advantage is provided that a screw can be used to help align the components around the article that is to be attached to the surface so that when the screw is used to fix the tie to the surface it also ensures that the flexible portion and the remainder of the tie wrap into close engagement around the article and ensure that it is held securely.

In a further preferred embodiment the strap member and said retaining member are formed as separate articles.

By producing the strap member and retaining member as separate articles, the advantages provided that the same retaining member can be used for different lengths of strap member that is designed for use with different sizes of cables and may therefore also have different curved portions in their base portion.

The first aperture may extend into said retaining member at a first angle on a first side and changes said angle before exiting from said retaining member on a second side.

By changing the angle that the first aperture extends through the retaining member provides the advantage that it encourages the ridge members into engagement with the edge portion thereby ensuring and retention of the strap member. As a result the tie is provided with a ratchet mechanism where the flexibility is provided by the strap member. This in turn ensures that as the tie is placed in situ around a cable it naturally holds itself in position assisting the fixing process. Furthermore, the tie is able to act as a tie without being fixed to a surface with the strap member providing the flexibility required to create a ratchet mechanism.

Preferred embodiments of the present invention will now be described, by way of example only, and not in any limitative sense, with reference to the accompanying drawings in which:
Figures 1 and 2 are perspective views of a tie of the present invention showing two components separated;
Figure 3 is a perspective view of the tie of Figure 1 with the components engaged;
Figure 4 is a perspective view of the tie of Figure 3 including a fixing screw;
Figure 5 is a sectional view of the tie and screw shown in Figure 4;
Figure 6 is a close-up of part of the sectional view of Figure 5;
Figure 7 is a perspective view of the tie and screw fixing of Figure 4 engaged with a small diameter cable prior to fixing to a surface;
Figure 8 is a perspective view corresponding to that of Figure 7 showing the fixing screw partially engaged as though extending into the surface;
Figures 9 and 10 are sectional views corresponding to Figure 8; and
Figures 11 to 14 are views corresponding to those of Figures 7 to 10 with the tie engaged with a larger diameter cable.

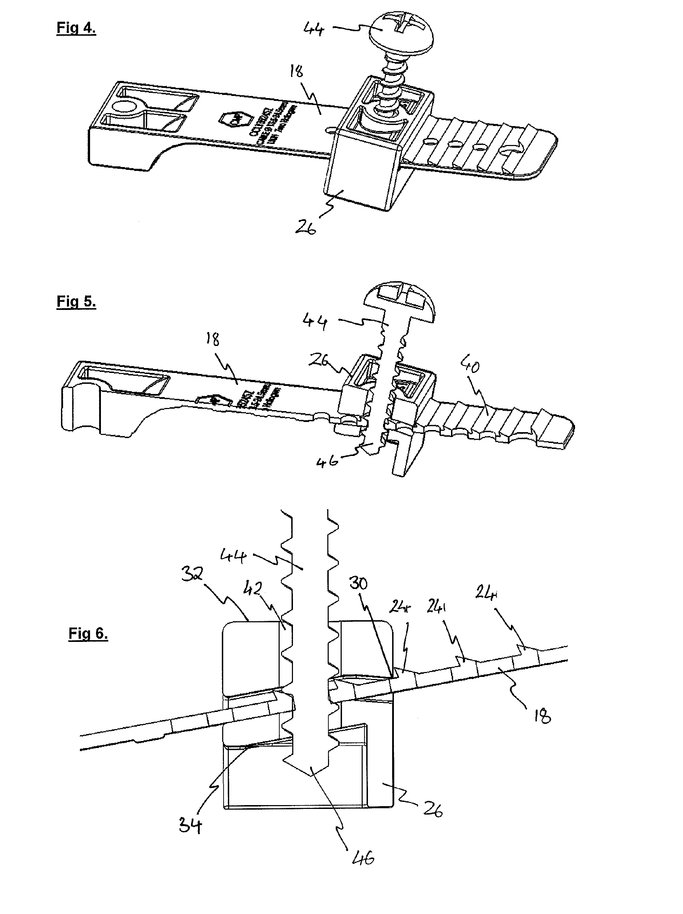

Referring to the Figures, a tie 10 is provided for fixing an article, such as a cable 12 to a surface 14 of, for example a wall 16. The tie 10 includes a strap member 18 that has a base portion 20 and an at least partially flexible portion 22. The strap member 18 is typically formed from a thermoplastic material, such as Nylon or Low Density Polyethylene, although it may be formed from any material that, when formed into a strip of material can be sufficiently flexible to provide the flexible portion 22. A series of fixing ridges 24 are provided on the flexible portion. These ridges 24 preferably have a "sharks-tooth" shape most clearly shown in cross-section on Figures 6, 10 and 14.

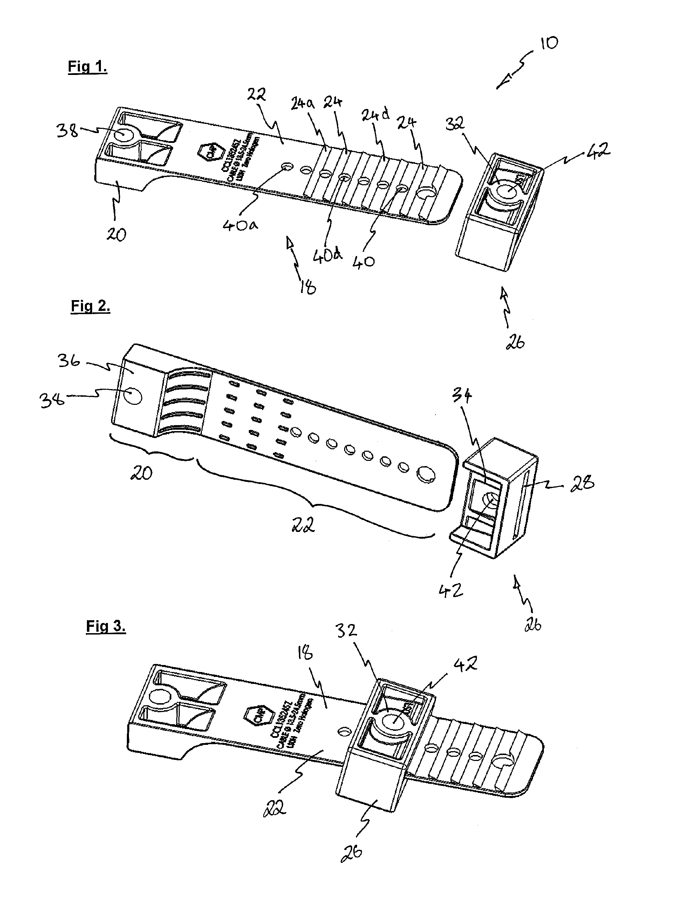

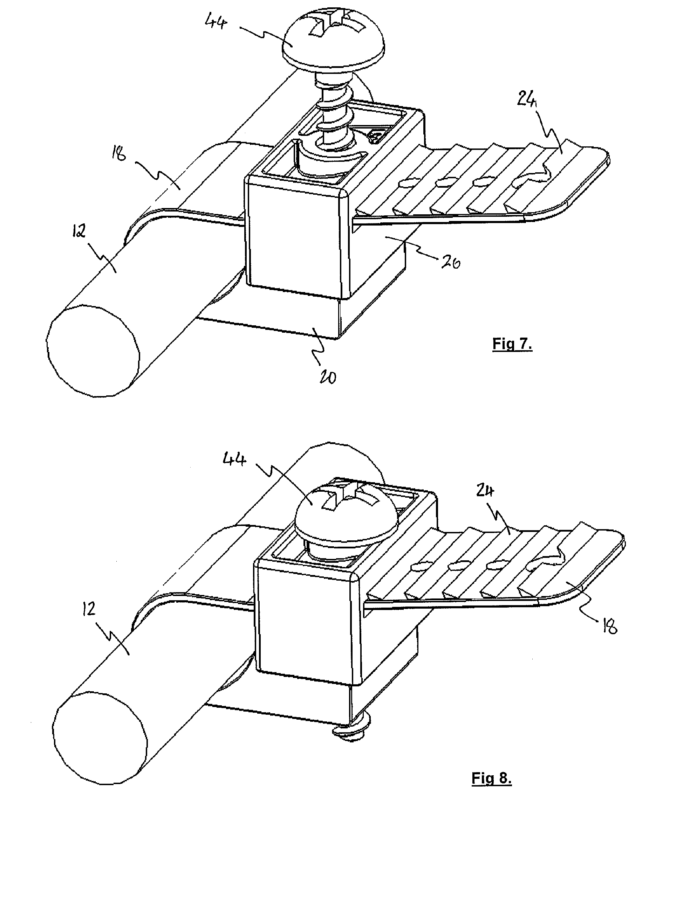

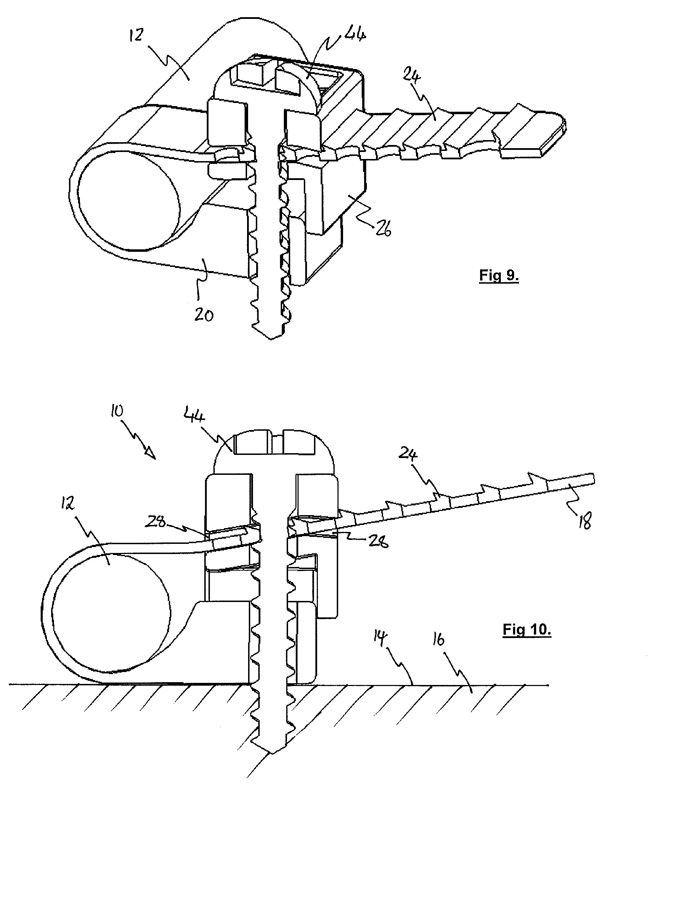

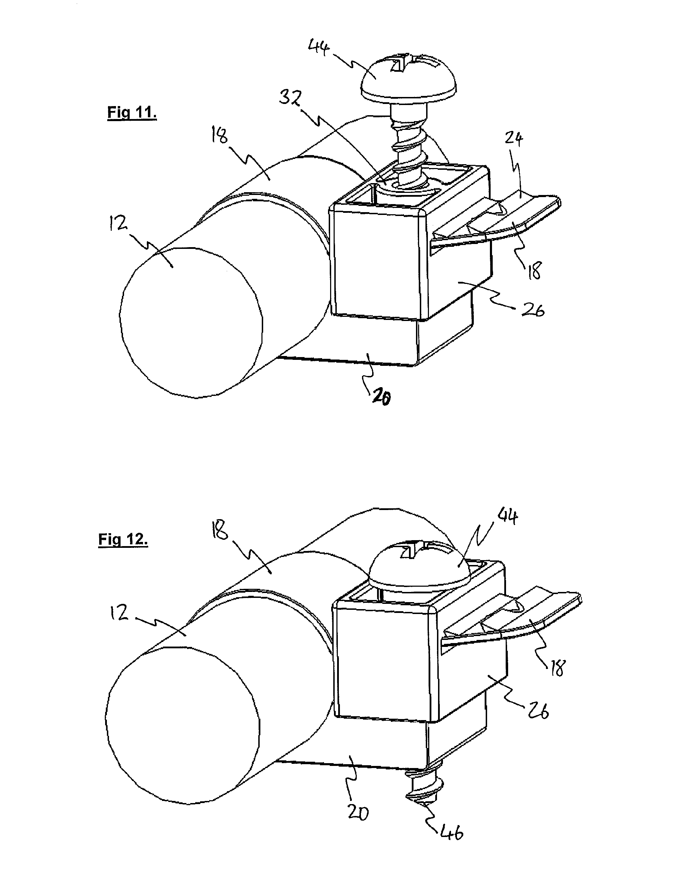

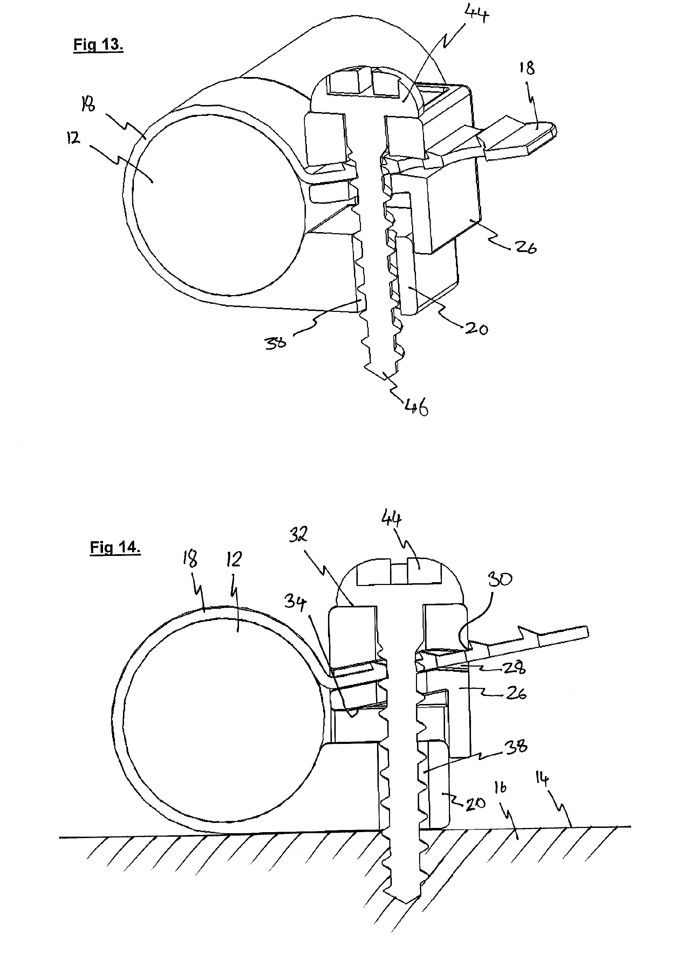

The tie 10 also includes a retaining member 26 that has a first aperture 28 extending therethrough. The first aperture 28 formed as a slot extending from one side of the retaining member 26 to the other and is sized to receive the flexible portion 22 of strap member 18, as shown in Figure 3. In Figures 7 to 14, the tie 10 is shown in use and from the sectional views, in particular shown in Figures 10 and 14, it can be seen that the first aperture 28 is not a linear aperture extending through the retaining member 26 and does not extend parallel to the surface 14 to which tie 10 fixes the cable 12. In particular, first aperture 28 extends from a starting position on the left and side of retaining member 26, as seen in Figures 10 and 14, at an angle upwards away from surface 14. Shortly before the aperture 28 reaches the right hand side of retaining member 28, as viewed in Figures 10 and 14, the angle changes and first aperture 28 extends slightly downwards. The upper edge of the exit of aperture 26 on the right hand side of retaining member 26 acts as a retaining edge portion 30. Alternatively this change in angle could be a smaller change to either extend horizontally from retaining member 26 or at a shallower angle than the left hand portion of first aperture 28. In a further alternative the aperture 26 could follow a curved profile.

Retaining portion 26 has a screw head engaging surface 32 on an upper side and a base engaging surface 34 on a lower side.

Returning to the strap member 18, the base portion 20 has a retaining member engaging surface 36 and a second aperture 38 extending through the base portion 20. The flexible portion 22 has third apertures 40 arranged adjacent the ridges 26 and extending in a line axially along the centre of the flexible portion 22. The third apertures 40 are arranged so as to work in cooperation with nearby ridges 24 such that the aperture 40a, that is closest to the base portion 20, works in cooperation with ridge 24a, this also being the ridge closest to the base portion 20, even though other third apertures are closer to ridge 24a. Similarly aperture 40d works in cooperation with ridge 24d. The retaining member 26 has a fourth aperture that extends almost perpendicular to the first aperture from the screw head engaging surface 32 to the base engaging surface 34.

Operation of the tie 10 will now be described. Strap member 18 is brought into engagement with retaining member 26 by extending the flexible portion 22 through the first aperture 28 in the arrangement shown in Figure 3. In this arrangement the base engaging surface 34 of retaining member 26 is located on the same side (out of view in Figure 3) as the retaining member engaging surface 36 of base portion 20. A fixing member, in the form of fixing screw 44, is located through fourth aperture 42 of retaining member 26 and through one of the third apertures 40 in flexible portion 22 such that the threaded end 46 partially protrudes through the end of fourth aperture 42 adjacent the base engaging surface 34. This arrangement is shown in Figures 4 to 6. The third aperture 40 that is selected depends upon the diameter of the cable that the tie is extending around. This can either be determined by trial and error or the appropriate aperture may be marked on the flexible portion. When the flexible portion is wrapped around the cable 12 the tip 46 of screw 44 will extend towards the second aperture 38 in base 20. As screw 44 is driven further into engagement it starts to extend into surface 14 of wall 16 fixing the tie 10 thereto. As can be seen from Figures 9 and 10, the small cable 12 is in loose engagement with the tie 10 and further rotation of fixing screw 44 will cause retaining member 26 to move closer to base portion 20 so that the base engaging surface 34 and retaining member engaging surface 36 come into engagement with each other. In the example using a larger cable shown in Figures 13 and 14 the larger diameter cable prevents the surfaces 34 and 36 from engaging each other.

As can be seen from Figures 6, 10 and 14, the change of angle in the first aperture ensures engagement of the ridge 24 with retaining edge portion 30. Because the majority of first aperture 28 extends at an angle away from the surface 14 the majority of the flexible portion that is extending through the first aperture 28 engaging the lower surface of aperture 28. However, when the first aperture 28 extends downwards, towards the right hand side of the retaining member 26, as viewed in these Figures, the flexible portion continues to extend at a slight upwards angle thereby ensuring that the ridge 24 engages the retaining edge 30.

For cables of a small diameter the base engaging surface 34 and retaining member engaging surface 36 are brought into engagement with each other and the screw further fixed so as to slightly squash the first aperture 28 into closed engagement around the flexible portion 22. This ensures that the ridge 24 that is engaging the retaining edge portion 30 cannot slip under the edge portion and return into the first aperture 28. However, for larger cables, the greater circumference of the cable may prevent the base engaging surface 34 and retaining member engaging surface 36 from engaging each other as previously described. It is not essential that these surfaces engage each other to provide effective gripping of the cable. Once the pressure of screw 44 causes first aperture 28 to flex and close the gap, there is no need to tighten the screw any further. It should be noted that this flexing is not shown in the accompanying drawings.

If sufficient flexible portion extends out of the right hand side of the retaining member 26, this can be folded back prior to the placing of the screw through the fourth aperture 42 to further assist the gripping. In other words the screw 44 first extends through an aperture 40 from the side shown in Figure 2 then extends through the first part of the fourth aperture 42 through a further third aperture 40 and through the reminder of fourth aperture 42 before extending into second aperture 36 and finally into wall 16.

It will be appreciated by persons skilled in the art that the above embodiments have been described by way of example only and not in any limitative sense, and that various alterations and modifications are possible without departure from the scope of the invention as defined by the appended claims.

For example the base portion 20 could be removed and the whole strap member could be formed from the flexible portion 22 with a second aperture 38 provided therein. In a further alternative the second, third and fourth apertures could be removed and be replaced with either guide apertures or points of weakness through which the screw can extend. It should also be noted that although the strap member 18 and retaining member 26 are shown in the above embodiment as separate items that could be formed together as a single article that is joined by a flexible connecting member that allows the retaining member 26 to engage the base portion 20 as shown and described above.

## Claims

1. A tie for fixing an article to a surface, the tie comprising:-
a strap member having at least one at least partially flexible elongate portion for wrapping around an article that is to be fixed, the flexible portion having at a plurality of fixing ridges thereon; and
a retaining member for retaining the strap member in engagement around the article, the retaining member having at least one first aperture extending therethrough for receiving the strap member, said first aperture having an edge portion adapted to engage at least one of said fixing ridges, wherein said tie is adapted to receive a fixing member extending through said retaining member, said strap member and said flexible portion and thereby forcing said edge into engagement with at least one of said ridges thereby preventing removal of said strap member from said first aperture.

2. A tie according to claim 1, wherein said strap further comprises a base portion that is connected to said strap member, said base portion being adapted to engage with said retaining member and have said fixing member extending therethough.

3. A tie according to claim 2, wherein said base member comprises a curved portion adapted to engage said article.

4. A tie according to claim 2 or 3, wherein said base member further comprises a second aperture extending therethrough.

5. A tie according to any one of the preceding claims, wherein said strap member further comprises a plurality of third apertures aligned axially along said strap and adapted to receive said fixing means therethrough.

6. A tie according to any one of the preceding claims, wherein said strap member and said retaining member are formed as separate articles.

7. A tie according to any one of the preceding claims, wherein said first aperture extends into said retaining member at a first angle on a first side and changes said angle before exiting from said retaining member on a second side.

8. A tie for fixing an article to a surface substantially as hereinbefore described with reference to the accompanying drawings.
